# EUROPÄISCHE PATENTANMELDUNG

(11) **EP 4 427 927 A1**
(43) Veröffentlichungstag der Anmeldung: **11.09.2024**
(21) Anmeldenummer: 23161097.3
(22) Anmeldetag: 10.03.2023
(51) Int. Cl.: B32B 7/14, B32B 15/04, B32B 15/20, C09J 7/35, C09J 7/28

(54) **FOLIE AUS ZUMINDEST ZWEI SCHICHTEN**

(71) Anmelder: Constantia Teich GmbH, 3205 Weinburg (AT)
(72) Erfinder: Springer, Sandra, 3240 Mank (AT); Hochecker, Barbara, 3053 Laaben (AT); Gruber, Michael, 3203 Rabenstein (AT); Zwetzbacher, Martin, 3203 Rabenstein an der Pielach (AT); Schedl, Adolf, 3180 Lilienfeld (AT); Kitzberger, Robert, 3133 Stollhofen (AT)
(74) Vertreter: Patentanwälte Barger, Piso & Partner

(57) **Zusammenfassung**

Die Offenbarung betrifft eine Folie mit einer Längsrichtung, die aus zumindest zwei Schichten besteht, einer Aluminiumschicht und einer Schicht aus heißsiegelfähigem Lack, wobei der Lack die Oberfläche der Folie unterschiedlich, gegebenenfalls nur partiell, bedeckt.

Die Offenbarung ist dadurch gekennzeichnet, dass der Lack in Streifen aufgetragen ist, die schräg zur Längsrichtung verlaufen, dass benachbarte Streifen des Lacks unterschiedliche Lackdicken aufweisen, dass die Lackdicke der dünnen Streifen zwischen 0µm und 1,5µm, bevorzugt zwischen 0,8µm und 1,3µm, und dass die Lackdicke der dicken Streifen etwa 2,5µm bis 3,5µm beträgt.

Bevorzugt verlaufen die Streifen unter 45° zur Längsrichtung; sie können geradlinig sein oder Wellenform oder Zick-Zack-Form aufweisen.

## Beschreibung

Die Offenbarung betrifft eine Folie mit einer Längsrichtung, die aus zumindest zwei Schichten besteht, einer Aluminiumschicht und einer Schicht aus heißsiegelfähigem Lack, und die insbesondere dazu bestimmt ist, Gegenstände, und hier wieder insbesondere Lebensmittel, wie Schokolade und ähnliches, zu verpacken.

Dabei kann die Aluminiumschicht, die ein Endlosmaterial ist und eine Längsrichtung aufweist, aus sogenanntem weichem oder auch hartem Aluminium bestehen, wie sie im Stand der Technik notorisch bekannt sind, auch der Heißsiegellack (HSL) in seinen diversen Varianten ist notorisch bekannt, dazu sei nur auf die DE 10 2001 086 372 A, die EP 0 574 803 B, die WO 2011/017 388 A, die DE 102 56 493 A und die JP 2010-132 911 A verwiesen, die sogenannte wässerige HSL betreffen. Auch lösungsmittelbasierte HSL sind umfasst, wenn sie auch in der Lebensmittelbranche zunehmend vermieden werden, sind sie bei zahlreichen anderen Anwendungsgebieten vorteilhaft oder zumindest akzeptiert, dazu sei auf die DE 10 2011 112 951 A verwiesen.

Auf dem technischem Gebiet dieser Offenbarung besteht seit Langem der Wunsch, so wenig Heißsiegellack als möglich einzusetzen. Dies hat nicht nur ökonomische Gründe, um am Siegellack zu sparen, sondern auch ökologische, da damit einerseits bei der Produktion an der Verwendung von natürlichem Ausgangsmaterial gespart werden kann und andererseits beim Recyceln der Folie eine der gesamten Verringerung der Masse entsprechende Verringerung der Umweltbelastung, erzielt werden kann. Es soll schon hier festgehalten werden, dass in der vorliegenden Offenbarung die Begriffe Heißsiegellack, HSL, Siegellack, Lack und auch einfach "Material" synonym verwendet werden und auch synonym sind.

Übliche Folien für die genannten Zwecke weisen einen Auftrag des Lacks (Grammatur) von zumindest 3g/m² auf. Der Lack ist dabei gleichmäßig über die gesamte Oberfläche des Endlosmaterials in Form einer Aluminiumfolie, mit einer Dicke von beispielsweise 10µm, in Sonderfällen zwischen 7µm und 50µm aufgebracht.

Als Beispiel im Zusammenhang mit einem solchen Bemühen nach Einsparung von HSL kann auf die WO 2017/089919 A1 verwiesen werden, die vorschlägt, entlang der endlosen Aluminiumbahn schräg verlaufende, parallele Streifen abwechselnd von Kaltsiegelmaterial und Heißsiegelmaterial anzuordnen. Speziell dient diese Anordnung dazu, Gegenstände wie Bonbons oder Zuckerln einzeln einzuwickeln, wobei die überstehenden Enden verdreht werden und schließlich die verdrehten Enden "in sich" verklebt werden. Da die Verwendung von Kaltsiegellacken bei Endlosmaterial, und ein solches ist allgemein üblich und auch nicht zu umgehen, sehr unangenehm ist, da es dazu tendiert. sich bereits beim Aufwickeln, spätestens aber bei längerer Lagerung, im aufgerollten Zustand zu verkleben und unbrauchbar zu werden, ist eine kaufmännische Nutzung im größeren Maßstab nicht möglich.

Dass die Streifen schräg am Endlosmaterial aufgebracht werden, ist vor allem damit begründet, dass dadurch beim Aufwickeln die Dickenunterschiede der Gesamtfolie keine Probleme bereiten; dies ist sowohl bei Längsstreifen als auch bei Querstreifen der Fall, trotz der marginalen Dicke der Lackaufbringung und der daraus folgenden geringen Dickenunterschiede des gesamten Folienverbundes.

Es hat auch Versuche gegeben, den Heißsiegellack nur in Form von parallelen, Abstand voneinander aufweisenden Streifen aufzubringen, ohne Streifen von Kaltsiegellack dazwischen, doch konnte mit derartigen "Mustern" des Heißsiegellacks keine zuverlässig dichte Verpackung erzielt werden, wenn sie beispielsweise um eine Stück Schokolade gebogen und dann an den drei offenen Seiten versiegelt werden. Zu diesen Versuchen wird weiter unten noch ausführlich ausgeführt.

Die Lackaufbringung selbst ist aus dem Stand der Technik in vielen Varianten bekannt und wird hier nur kurz und grob zur Erläuterung abgehandelt.

Sie erfolgt beispielsweise in einem Lackierverfahren oder in einem Druckverfahren, insbesondere im Siebdruckverfahren. Es kann dabei der HSL mit einer ausreichenden Präzision in Hinblick auf Flächendeckung und Toleranzen, partiell oder vollflächig, oder in Hinblick auf eine besondere beschränkte Schichtdicke, auf die auf der Schauseite zumeist bereits bedruckten Bahnen aus Aluminium aufgebracht werden.

Eine andere Art der Aufbringung erfolgt über ein Zwei-Walzensystem oder ein Drei-Walzensystem:
Beim Drei-Walzensystem taucht eine glatte oder leicht raue Walze, die Transportwalze (oder Tauchwalze), in einer Wanne in den Lack, den sie durch die Drehung an ihrem Mantel mitnimmt. Dabei wird durch eine Rakel dafür gesorgt, dass die Dicke des Lacks auf dieser Transportwalze möglichst gleich ist. Durch cum grano salis lineare Berührung wird der Lack auf eine zweite, ebenfalls glatte, die Auftragswalze, übertragen. Das Verhältnis der Rotationsgeschwindigkeiten der beiden Walzen zueinander bestimmt dabei die Auftragsmenge. Das Endlosmaterial wird durch die dritte Walze, die Gegenwalze, die oft einen Gummiüberzug oder Kunststoffüberzug aufweist und glatt ausgebildet ist, gegen die Auftragswalze gedrückt.

Beim Zwei-Walzensystem taucht die Auftragswalze direkt in die Wanne und ist so auch die Tauchwalze. In ihren Mantel sind napfartige Vertiefungen (Näpfe) eingearbeitet, in die der Lack gelangt, der Überstand wird mit einer Rakel abgestrichen. Aus den Näpfen wird der Lack auf das Endlosmaterial aufgetragen, die Napfgröße und Napftiefe bestimmt die Auftragsmenge, die zweite Walze ist die Gegenwalze.

Auf dem Endlosmaterial verwischt und verrinnt der näpfchenförmige Auftrag sofort zu einer de facto gleichmäßigen Dicke. All dies ist Stand der Technik und bedarf keiner näheren Erläuterung.

Es ist Ziel und Aufgabe der Offenbarung, hier eine solche Verbesserung vorzunehmen, dass bei möglichem sparsamem Gebrauch an Lack eine zuverlässige dichte Siegelung auch bei unterschiedlichen Größen der eingeschlagenen Gegenstände (Schokoladetafeln) erfolgt.

Es ist hier einzuschieben, dass die Verpacker Gegenstände mit unterschiedlichen geometrischen Abmessungen verpacken, und dabei dennoch immer auf ein und dieselbe Folie zurückgreifen wollen, weil dies die Lagerhaltung vereinfacht, und auch das Umrüsten der Verpackungsstation auf Gegenstände unterschiedlicher geometrischer Abmessungen vereinfacht, weil an der Rolle mit dem Endlosmaterial keine Änderungen vorgenommen werden müssen.

Auf einem anderen technischen Gebiet, dem Verschließen von Joghurtbechern und ähnlichem mit einer Platine, ist es aus der EP 3 263 477 B1 bekannt, bei der Platine auf einer Grundschicht eine Heißsiegelschicht und eine Schicht aus haftverhinderndem Material aufweist, wobei die Heißsiegelschicht durch periodische Änderungen der Dichte von Füllstoffen Streifen mit unterschiedlicher Dicke aufweist und unter der haftreduzierenden Schichte angeordnet ist. Die Herstellungskosten sind exorbitant, und für eine Verpackung der eingangs genannten Art ist die Folie völlig unbrauchbar.

Auf wieder einem anderen technischen Gebiet ist es aus der DE 10 2012 107 407 A1 bekannt, zum Verpacken von einzelnen Gegenständen stets gleicher Größe Klebstoff nur an bestimmten Bereichen des Endlosmaterials aufzubringen und dabei noch verschiedene Grammaturen (aufgetragene Masse/m²) zu verwenden. Dazu ist auch die Aufbringung in Form von Streifen oder Punkten geoffenbart. Abgesehen von der komplexen Herstellung ist der Hauptnachteil, wie bereits oben kurz erwähnt, dass mit einer vorhandenen Rolle des Endlosmaterials nur Gegenstände mit immer genau den gleichen, vorgegebenen Abmessungen verpackt werden können, was von den Abnehmern wegen der Lagerhaltung und den Umstellungen beim Wechsel der zu verpackenden Gegenstände nur in exotischen Sonderfällen akzeptiert wird.

Es besteht somit ein Bedarf an einem Verpackungsmaterial, das eine problemlose, dichte, Verpackung auch von Gegenständen unterschiedlicher Abmessungen ermöglicht und dabei die Grammatur an Lack möglichst reduziert. In der nachfolgenden Erzählung wird eine Lösung für diese Aufgabe angegeben.

Die Lösung besteht darin, dass der Heißsiegellack in Form paralleler Streifen (oder Bänder, wie man will) mit abwechselnd unterschiedlicher Dicke, sprich unterschiedlicher Grammatur, schräg bezüglich der Längsrichtung auf das Endlosmaterial aus Aluminium aufgetragen wird.

Wenn das Auftragen des HSL mittel des Zwei-Walzen-Systems erfolgt, werden die Näpfe auf der Auftragswalze entsprechend unterschiedlich ausgebildet und/oder angeordnet, dadurch bildet sich auf dem Endlosmaterial das schräge Streifenmuster des Heißsiegellacks aus.

Dabei weisen bevorzugt die dünnen Streifen eine Dicke des Lacks zwischen 0µm und 1,5µm, bevorzugt zwischen 0,8µm und 1,3µm auf. Bevorzugt beträgt die Dicke des Lacks etwa 1µm oder knapp darüber. Die dicken Streifen haben eine Dicke des Lacks von etwa 3µm. Natürlich sind die Übergänge dick-dünn stetig verlaufend, die angegebenen Größen daher gemittelt und müssen auch durch Mittelung mehrerer Messungen bestimmt werden. Damit wird die gesamte, durchschnittliche, Grammatur der Folie von 3g/m² auf 1,8g/m² reduziert, was insbesondere in Anbetracht der dreistelligen Millionen Quadratmeter Produktion solcher Folien pro Jahr weltweit äußerst bedeutsam ist.

Hier ist es notwendig, auf eine Besonderheit hinzuweisen: Üblicherweise verlangen die Verpacker, dass die fertige Folie eine zumeist vollflächige Prägung erhält. Der Grund dafür ist rein optischer Natur: Durch die Prägung fallen die unvermeidlichen Dellen, Kanten, und anderen technisch unbedeutenden, aber bei ungeprägten Folien optisch auffälligen Störungen der "Glätte" nicht auf. Die Prägung selbst ist dabei ebenfalls möglichst unauffällig, bewirkt aber trotz der minimalen Prägetiefe, dass bei Reduktion der dünnen Streifen auf die Dicke Null keine zuverlässige Verklebung mehr erfolgt, sodass die untere Grenze der Grammatur für die dünnen Streifen die oben angegebenen 0,8g/m² sind. Wenn ein Verpacker aber glatte (=ungeprägte) Folie verwendet, dann kann die Dicke der dünnen Streifen bis auf Null gesenkt werden. Was die Ersparnis erhöht.

Bei einer Prägung von 50-60% liegt die Lackdicke der dünnen Streifen bevorzugt zwischen 0,8µm und 1,3µm.

Interessanterweise bedarf die Grammatur bei der Aufbringung auf dickere oder auch dünnere Aluminiumfolien als die oben als üblich angegebenen 10µm keiner Änderung.

Als Beispiele für verwendbare HSL-Systeme können die folgenden, ohne Beschränkung der Verwendbarkeit der zahlreichen HSL, genannt werden:
Wasserbasierter Lack auf Basis EAA (Ethylen-Acrylsäure-Copolymer)
   Festkörpergehalt: 25% (25-30%)
   Kinematische Viskosität (20°C): 100-150 mm²/s
Wasserbasierter Lack auf Basis EMA (Ethylen-Methylacrylat-Copolymer)
   Festkörpergehalt: 27% (25-30%)
   Kinematische Viskosität (20°C): 100-150 mm²/s

Obige insbesondere für die Verpackung von Lebensmitteln, das folgende für andere Gegenstände:
Lösemittelbasierter Lack auf Basis VC-VA-Säure (Vinylchlorid-Vinylacetat-Säure-Copolymer)
Festkörpergehalt: 28% (25-30%)
Kinematische Viskosität (20°C): 100-150 mm²/s

Um die Herstellung einer solchen Folie anhand eines Beispiels zu erläutern, werden unter Heranziehung des Zwei-Walzen-Systems die folgenden möglichen Dimensionen der einzelnen Näpfchen, hergestellt durch übliches Ätzen, gemessen auf der Auftragswalze, angegeben:
Es werden für die Aufbringung der 3g/m² HSL der dicken Streifen 60 quadratische Näpfchen/cm vorgesehen, quer dazu somit ebenfalls 60/cm (ergibt 3600 Näpfchen/cm²), mit einer Tiefe von 65µm. Für die dünnen Streifen sind in beiden Richtungen 80 Näpfchen/cm vorgesehen, deren Tiefe 15µm beträgt.

Die Breite der dünnen Streifen (normal zur Richtung des Streifens an der Oberfläche der Folie gemessen) liegt bei der häufig auftretenden Breite der Siegelbacke von 10mm praktischerweise zwischen 4mm und 6mm, etwa 5mm sind optimal, die Breite der dicken Streifen zwischen 1mm und 3mm, hier sind 2mm optimal. Es sind somit die dicken Streifen schmäler als die dünnen Streifen. Bei Siegelbacken anderer Breite sind diese Werte anzupassen, was für den Fachmann in Kenntnis der Offenbarung keine Probleme mit sich bringt.

Der Lack bzw. seine Dicke verläuft dann in Richtung normal zur Streifenrichtung annähernd sinusförmig, bei der Dicke der dünnen Streifen von 0µm mit einer nahezu auf Null gehenden Abflachung, die ein dichtes Verschließen dennoch ermöglicht.

Dabei ist es vorteilhaft, wenn die Näpfchen auf der Walze so schräg angeordnet sind, dass ihre Ränder in Streifenrichtung bzw. normal dazu verlaufen.

Für die Herstellung mittels einer Drucktechnik, wie oben angegeben, kann der Fachmann anhand dieser Angaben leicht die für das Druckverfahren passenden Parameter eruieren.

Es hat sich überraschenderweise als vorteilhaft erwiesen, wenn auf der Auftragswalze zwischen einem dicken Streifen und jedem benachbarten dünnen Streifen ein schmaler, freier Abstand verbleibt, bevorzugt mit einer Breite (gemessen normal zur Streifenrichtung), die dem 0,5-fachen bis zum 1,5-fachen der Abmessung der "dicken" Näpfe in dieser Richtung entspricht. Damit kommt man bei obigen Werten zu Abständen von 1/120cm (=> 0,083mm) bis 1/40cm (=> 0,25mm). Auch die Herstellung der Auftragswalzen wird so vereinfacht.

Insbesondere, wenn der Lack durch Druckverfahren aufgebracht wird, kann dies in zwei getrennten Schritten geschehen: Es wird der Lack in einem Schritt in der Dicke der dünnen Streifen vollflächig aufgetragen, und in einem davon getrennten Schritt wird der Lack für die dicken Streifen in der Differenzdicke streifig aufgetragen. Die Reihenfolge der Schritte ist dabei egal.

Der Winkel zwischen der Längsrichtung (des Endlosmaterials) und der Richtung der Streifen liegt zwischen 30° und 60°, bevorzugt zwischen 40° und 50° und besonders bevorzugt bei 45°. Bei 45° spielt bei rechteckigen Gegenständen deren Orientierung bezüglich der Längsrichtung beim Verpacken und Siegeln keine Rolle.

Zu den Streifen ist noch auszuführen, dass sie aus Gründen der Zweckmäßigkeit bevorzugt geradlinig vom Rand des Endlosmaterial zum gegenüberliegenden Rand verlaufen, dass es aber aus optischen Gründen, die ja bei Verpackungen aller Art oft eine große Rolle spielen, möglich ist, den Streifen Wellenform oder Zick-Zack-Form zu geben, sodass eine fiktive, über die Länge der Streifen gemittelte Linie die schräge Richtung (mittlere Streifenrichtung) vorgibt. Dem Fachmann ist klar, dass er bei einer solchen Anordnung die Breite der Siegelbacke besonders berücksichtigen muss, was in Kenntnis der Offenbarung keine Probleme bereitet. Als Richtwert für die maximale Abweichung von der mittleren Streifenrichtung können die oben angegebenen Winkel dienen.

Die Breite der Siegelbacke, ihre Temperatur, der angewandte Siegeldruck, die Breite, der Abstand und eventuell die Form der Streifen führt dazu, dass beim Siegeln über die gesamte Siegellänge ein zusammenhängender gekrümmt verlaufender, gesiegelter Längsbereich (Siegelstreifen, nicht zu verwechseln mit den Streifen der HSL Aufbringung!) geschaffen wird, der überall über eine Mindestbreite verfügt, die vom Verpacker in Kenntnis des Materials und der gewünschten Dichtheit und Robustheit der Verpackung vorgegeben ist. von diesen Daten ausgehend, kann der Fachmann in Kenntnis der Erfindung und des verwendeten HSL die Streifen am Endlosmaterial und somit die Details der Aufbringung je nach verwendeter Technik leicht bestimmen.

Es können natürlich auf dem Endlosmaterial noch weitere Schichten, besonders auf der Außenseite (Schauseite), vorgesehen sein, die Offenbarung ändert daran nichts, das ist wie im Stand der Technik und bedarf keiner Erläuterung.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Offenbarung, soweit sie nicht konkrete Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen Merkmale und Varianten können mit denen der anderen Beispiele und Ausgestaltungen frei kombiniert und insbesondere zur Kennzeichnung der Offenbarung in den Ansprüchen ohne zwangläufige Mitnahme der anderen Details der jeweiligen Ausgestaltung bzw. des jeweiligen Beispiels verwendet werden

Die vorliegende Offenbarung betrifft auch eine Erfindung, geht aber über sie hinaus und schränkt sie keinesfalls ein, weshalb durchgehend Offenbarung gesetzt wurde.

## Patentansprüche

1. Folie mit einer Längsrichtung, die aus zumindest zwei Schichten besteht, einer Aluminiumschicht und einer Schicht aus heißsiegelfähigem Lack, wobei der Lack die Oberfläche der Folie unterschiedlich, gegebenenfalls nur partiell, bedeckt, **dadurch gekennzeichnet, dass** der Lack in Streifen aufgetragen ist, die schräg zur Längsrichtung verlaufen, dass benachbarte Streifen des Lacks unterschiedliche Lackdicken aufweisen, dass die Lackdicke der dünnen Streifen zwischen 0µm und 1,5µm liegt, und dass die Lackdicke der dicken Streifen etwa 2,5µm bis 3,5µm beträgt.

2. Folie nach Anspruch 1, **dadurch gekennzeichnet, dass** sie glatt bleibt, und dass die Lackdicke der dünnen Streifen zwischen 0µm und 0,5µm beträgt.

3. Folie nach Anspruch 1, **dadurch gekennzeichnet, dass** sie geprägt wird, und dass die Lackdicke der dünnen Streifen zwischen 0,8µm und 1,3µm beträgt.

4. Folie nach einem der Ansprüche 1 bis 3, **dadurch gekennzeichnet, dass** die Breite der dünnen Streifen zwischen 4mm und 6mm, bevorzugt etwa 5mm, beträgt.

5. Folie nach einem der Ansprüche 1 bis 4, **dadurch gekennzeichnet, dass** die Breite der dicken Streifen zwischen 1mm und 3mm, bevorzugt etwa 2mm, beträgt.

6. Folie nach einem der voranstehenden Ansprüche, die mit einem Zwei-Walzen-System hergestellt ist, **dadurch gekennzeichnet, dass**, gemessen in Richtung längs und normal zu den Streifen, die Auftragswalze bei den dicken Streifen 60 quadratische Näpfchen/cm aufweist, quer dazu ebenfalls 60/cm², mit einer Tiefe der Näpfchen von 65µm, und dass für die dünnen Streifen in beiden Richtungen 80 quadratische Näpfchen/cm vorgesehen, deren Tiefe 15µm beträgt.

7. Folie nach Anspruch 6, **dadurch gekennzeichnet, dass** die Auftragswalze zwischen den Streifen der unterschiedlichen Näpfchen, gemessen in Richtung normal zur Streifenrichtung, einen Abstand in Form eines ebenen Bereichs aufweist, der von 1/120cm (=> 0,083mm) bis 1/40cm (=> 0,25mm) beträgt.

8. Folie nach einem der Ansprüche 1 oder 3, **dadurch gekennzeichnet, dass** der Lack, insbesondere mittels eines Druckverfahrens in zwei Schritten aufgebracht wird, dass dabei in einem Schritt der Lack in der Dicke der dünnen Streifen vollflächig aufgetragen wird, und dass in einem davon getrennten Schritt der Lack für die dicken Streifen in der Differenzdicke streifig aufgetragen wird.

9. Folie nach einem der voranstehenden Ansprüche, **dadurch gekennzeichnet, dass** der Winkel zwischen der Längsrichtung und der Streifenrichtung zwischen 30° und 60° liegt, bevorzugt zwischen 40° und 50° und besonders bevorzugt bei 45°.

10. Folie nach einem der voranstehenden Ansprüche, **dadurch gekennzeichnet, dass** die Streifen Wellenform oder Zick-Zack-Form aufweisen.
